# EUROPEAN PATENT APPLICATION

(11) **EP 4 513 771 A1**
(43) Date of publication of application: **26.02.2025**
(21) Application number: 24195457.7
(22) Date of filing: 20.08.2024
(51) Int. Cl.: H04B 5/26, H04B 1/3822, H04B 5/48, H04B 5/79

(54) **NEAR FIELD COMMUNICATION SYSTEM**

(30) Priority: 21.08.2023 US 202318452643
(71) Applicant: BCS Access Systems US, LLC, Wilmington, New Castle County, Delaware 19808 (US)
(72) Inventor: LIN, Xing Ping, West Bloomfield, Michigan, 48324 (US); KURTH, Kevin B., Commerce Township, Michigan, 48382 (US); MARTUS, Richard A., Livonia, Michigan, 48154 (US)
(74) Representative: Prinz & Partner mbB

(57) **Abstract**

A near field communication, NFC, system (10) is disclosed, wherein the NFC system (10) is implemented in an application in a vehicle (16). The NFC system (10) comprises a NFC device (12) with a device housing (22) and an antenna (14). The NFC device (12) and the antenna (14) are two separate components connected to each other with a flexible connection (26) forwarding currents between the NFC device (12) and the antenna (14).

## Description

The invention relates to a near field communication (NFC) system, wherein the NFC system is implemented in an application in a vehicle.

Near field communication (NFC) is a short range communication technology, which has mostly been used for mobile payment and ticketing. Recently, the automotive industry has started implementing NFC systems to create vehicle access systems or vehicle ignition systems and the like. For example, the NFC system may also be positioned in a lift gate or any other location.

However, nowadays vehicles are equipped with more and more electronic devices such that the space to position NFC systems in a vehicle is strongly limited. Furthermore, the difficulty of positioning the NFC system is increased by taking into account the electromagnetic compatibility (EMC) of the antenna position. It is very costly to test NFC systems for EMC, regulatory complaint, and production application such that it is important to design a NFC system that has a flexible form and can be used in many applications and locations.

Therefore, it is an objective of the invention to provide a NFC system that is easier to position in the vehicle.

This objective is solved by a near field communication (NFC) system, wherein the NFC system is implemented in an application in a vehicle, for instance a vehicle access system or a vehicle ignition system. The NFC system comprises a NFC device with a device housing and an antenna. The NFC device and the antenna are two separate components connected to each other with a flexible connection forwarding currents between the NFC device and the antenna. In other words, the NFC device and the antenna are two modular building blocks connected to each other via the flexible connection. The basic idea is that the NFC system comprises the NFC device and the antenna as separate components that can be moved relative to each other due to the flexible connection. That way it is easier to position the antenna inside the vehicle and the NFC system becomes more versatile as it is easier to adjust.

Generally, the antenna is used to receive and transmit signals, e.g. receive and generate electromagnetic fields, whereas the NFC device is used to process the signal received, namely the electromagnetic field received. Further, the NFC device may also generate the signal to be transmitted, e.g. the electromagnetic field to be generated, by means of the antenna connected to the NFC device.

According to an embodiment, the device housing has a fastening mechanism such that the antenna is reversibly attached to the device housing of the NFC device. Depending on the vehicle application of the NFC system, the antenna may be attached to the NFC device such that the "standard" NFC device design is provided in order to save space in certain applications. However, if required the antenna can be detached from the device housing of the NFC device such that the antenna and the NFC device are distanced from each other in the installed state.

Preferably, the fastening mechanism comprises a snap-in member or a clip-member. In other words, the device housing has a fastening mechanism capable of clipping the antenna onto the device housing of the NFC device.

According to a further embodiment, the antenna and the NFC device are movable with respect to each other so as to be mounted in separate locations. Not only does this mean, that the standard NFC device design can be achieved making the NFC system more adjustable but also that the antenna can be positioned in an optimized location without having to worry about having enough space for the device housing at the same location. In addition, the influence of disturbing electromagnetic sources can be reduced by positioning the antenna differently. This is possible due to the flexible connection established between the antenna and the NFC device.

In particular, the flexible connection between the NFC device and the antenna can vary in lengths depending on the distance required between the NFC device and the antenna. For instance, the flexible connection may be replaced by another one having a different length, thereby ensuring that the desired distance between the NFC device and the antenna is achieved.

According to an embodiment, the antenna is located on a frame, wherein the frame is connected to the NFC device. In particular, the frame of the antenna may be provided by layers of glue or double sided tape on either side of the antenna. Alternatively, the frame may also be a clip, a slider or a flexible structure.

Preferably, the frame is a flexible structure allowing for even more possibilities of positioning the antenna.

In particular, the device housing may comprise a recess into which the frame may be placed and/or clipped. Thus, a compact overall design can be obtained if desired.

According to a further embodiment, the antenna is placed into an antenna housing. Compared to the frame, the antenna housing is sturdier and therefore provides more protection for the antenna. In other words, the antenna housing is a rigid housing that contains the antenna, whereas the frame only provides a certain support to the antenna. However, the antenna housing also requires more space than the frame. Actually, using a frame or rather an antenna housing may depend on the respective application scenario and/or the installation space.

In order to provide the reversible fastening mechanism, the device housing and/or the antenna housing has/have a snap-in member capable of establishing a snap-fit connection. By providing a snap-fit connection it is ensured that the antenna (located in the antenna housing) and the device housing may be separated or connected to each other providing the desired adjustability.

The antenna housing may also comprise a centre bar and a circumferential frame that encompasses a space divided by a centre bar such that two windows are provided. This allows the antenna frame to house two separate antennas such that coverage in dual areas is provided. In this way, the two antennas can be used independently for two external device or improve the coverage if one antenna is blocked or fails. Further, having two different antennas with two different locations allows for one NFC system being used in different applications located in proximity to each other. The two antennas may also have different characteristics. For example, one antenna may have a high Q factor in order to provide long range wakeup and charging while the other antenna has a low Q factor for data communication.

According to an embodiment, the flexible connection between the NFC device and the antenna comprises at least two flexible wires. By connecting the NFC system components over wires, material can be saved since these wires are used to forward currents between the NFC device and the antenna. In other words, there is no need for a further flexible connection than the connection provided by the flexible wires.

The at least two flexible wires providing the flexible connection may be associated to a positive and negative pole respectively. In fact, the at least two flexible wires may be two completely separate electrical wires.

Preferably, the at least two flexible wires are separately formed meaning there is no connection between the wires themselves.

Furthermore, the at least two flexible wires may be parallel and within proximity to each other such that possible emissions from the wires are minimized.

In order to mitigate emission from the connection point of the wires, a ground plate may be attached to one side of the at least two flexible wires.

According to an alternative embodiment, the flexible connection comprises a flat conductor cable. Such a flat conductor cable provides more stability compared to the two separate flexible wires.

Furthermore, a circuit board may be positioned inside the device housing. This circuit board is required in order to decode any signals received via the antenna since these signals provide information required, for example to access the vehicle.

Preferably, the circuit board is a printed circuit board.

According to a preferred embodiment, the antenna is attached to the device housing on a side opposite to the circuit board. This maximizes the space between the circuit board and the antenna, which in turn improves the antenna performance since possible interference due to the circuit board and/or other electrical devices is minimized.

The NFC system may also comprise a connector or a header, which is placed on the circuit board. In this case, an access opening is provided in the device housing via which the connector is accessible. The connector allows for establishing a connection between the NFC device and other electric components in the vehicle, for example the locking mechanism of the vehicle such that a car access system can be provided.

According to a preferred embodiment, the antenna is a flexible antenna or placed on a thin board structure. By having a flexible antenna, more options for positioning the antenna are available while a thin board structure minimizes the space taken up by the antenna itself. In case of a thin board structure for the antenna, the antenna is preferably made from a FR4, i.e. a class reinforced epoxy laminate material.

Overall, the antenna may have any shape and is not limited to being rectangular, circular, triangular, or having any other polygonal structure. The antenna may also be any kind of three-dimensional structure providing a curvature which fits the surface it is to be mounted to the best.

The foregoing aspects and many of the attendant advantages of the claimed subject matter will become more readily appreciated as the same become better understood by reference to the following detailed description, when taken in conjunction with the accompanying drawings, wherein:
- Figure 1 shows a schematic drawing of a first embodiment of a NFC system according to the invention, wherein a NFC device and an antenna are separated from each other;
- Figure 2 shows a schematic drawing of the first embodiment, wherein the NFC device and the antenna are connected with each other;
- Figure 3 shows a schematic drawing of a second embodiment according to the invention, wherein the NFC device and the antenna are separated from each other;
- Figure 4 shows a schematic drawing of a third embodiment according to the invention, wherein the NFC device and the antenna are connected to each other;
- Figure 5 shows a cross sectional view of the third embodiment shown in Figure 4, and
- Figure 6 shows a schematic drawing of a vehicle with a NFC system.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purpose of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

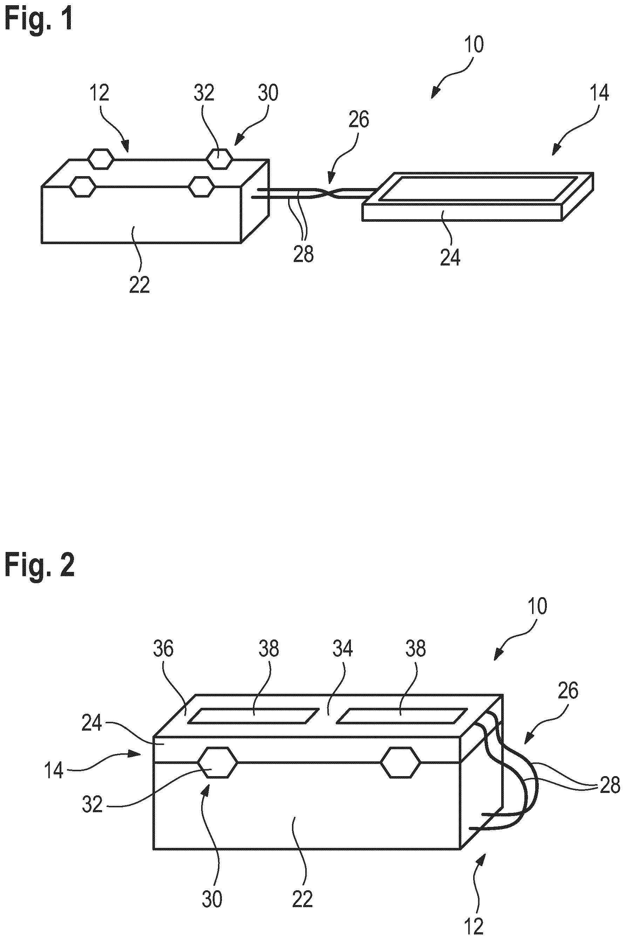

Figure 1 shows a near field communication (NFC) system 10 comprising a NFC device 12 and an antenna 14.

The antenna 14 may be a flexible antenna or the antenna 14 may be placed on a thin board structure providing support to the antenna 14, particularly the electrical conductors of the antenna 14.

In case of a thin board structure, it is preferably made from FR4, i.e. glass reinforced epoxy laminate material, such that it can be fit into thin structures.

Alternatively, the thin board structure may be provided by glue, double-sided tape, clips, sliders, etc. or a flexible printed circuit board (PCB).

In case of a flexible antenna 14, its shape may vary as well as its dimensions. It may be a 2D structure in the form of a circle, a triangle, a trapeze or any other polygone or it may be a 3D dimensional structure providing different curvatures as to fit to the mounting surface.

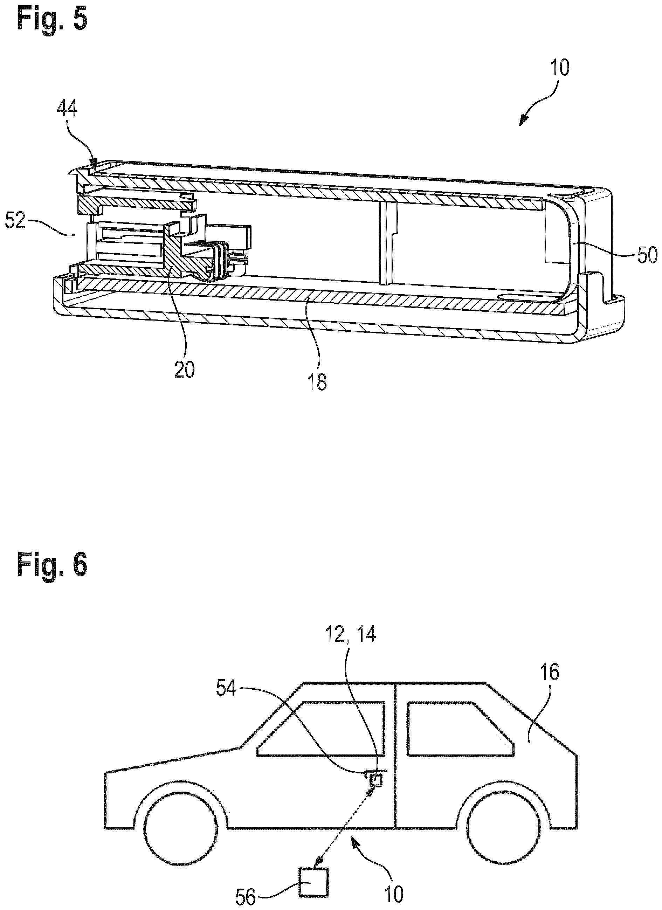

The NFC system 10 is intended to be implemented in an application in a vehicle 16, for example as a vehicle access system, as shown in Figure 6.

Generally, the NFC device 12 comprises a circuit board 18 and a connector 20, which are placed inside a device housing 22, and which can be seen in Figure 5.

In the embodiment of the NFC system 10 shown in Figure 1, the antenna 14 is encompassed by an antenna housing 24.

The antenna 14 is connected in a transmitting manner with the NFC device 12, particularly its circuit board 18, such that the NFC device 12, namely the circuit board 18, can decode the signal received via the antenna 14.

Therein and in the following, the term "connected in a signal-transmitting manner" is understood to denote a connection that is configured to transmit signals between the respective devices or components.

In particular, the NFC device 12 and the antenna 14 are designed as two separate components. These two components are connected to each other with a flexible connection 26, wherein the flexible connection 26 is configured to forward currents between the NFC device 12 and the antenna 14.

The flexible connection 26 may comprise at least two flexible wires 28, which are separately formed and positioned parallel and within proximity to each other. That way the emissions of the electric wires may be minimized.

The at least two wires 28 may be associated with a positive and a negative pole respectively. In fact, they may be two separate wires.

The two components making up the NFC device 12 and the antenna 14 are reversibly attached to each other via a fastening mechanism 30 as shown for example in Figure 2.

In the embodiment of the NFC system 10 shown in Figures 1 and 2, the fastening mechanism 30 comprises a snap-in member 32 capable of establishing a snap-fit connection between the antenna housing 24 and the device housing 22.

While it can be seen in Figure 1 that the device housing 22 provides the snap-in member 32, the antenna housing 24 may alternatively or additionally comprise a snap-in member 32 in order to establish the snap-fit connection between the two components.

Since the antenna 14 is reversibly attached to the device housing 22, the NFC system 10 may be implemented in the vehicle 16 with the antenna housing 24 attached to the device housing 22 or alternatively, the NFC system 10 may be implemented with the two components separated from each other.

This allows for a more flexible placement of the NFC system 10, which is particularly advantageous since the vehicle 16 is equipped with more and more electronic devices such that there is limited space for the NFC system 10 in the vehicle 16.

Furthermore, the placement of the antenna 14 is more crucial for an optimized performance of the NFC system 10 than the placement of the NFC device 12. Depending on the desired location of the NFC system 10 in the vehicle 16 and on the available space, the NFC device 12 and the antenna 14 may be placed into separate locations.

In the embodiment shown in Figure 2, as an option, the antenna housing 24 comprises a centre bar 34 and a circumferential frame 36. In particular, the space encompassed by the circumferential frame 36 is divided by the centre bar 34 such that two windows 38 are provided.

With the antenna housing 24 constructed this way, it is possible to include two separate antennas 14 in the circumferential frame 36 such that the operation range and the performance of the NFC system 10 can be extended or optimized respectively, in particular if the antennas 14 operate with different Q factors. High Q factors provide a longer detection and charging range or a longer operation for low data rates whereas low Q factors provide faster data communication. Furthermore, one antenna can be used for a NFC application while the other antenna may be used for Bluetooth/Bluetooth light or even ultra-high frequency (UHF) remote keyless applications in the same manner.

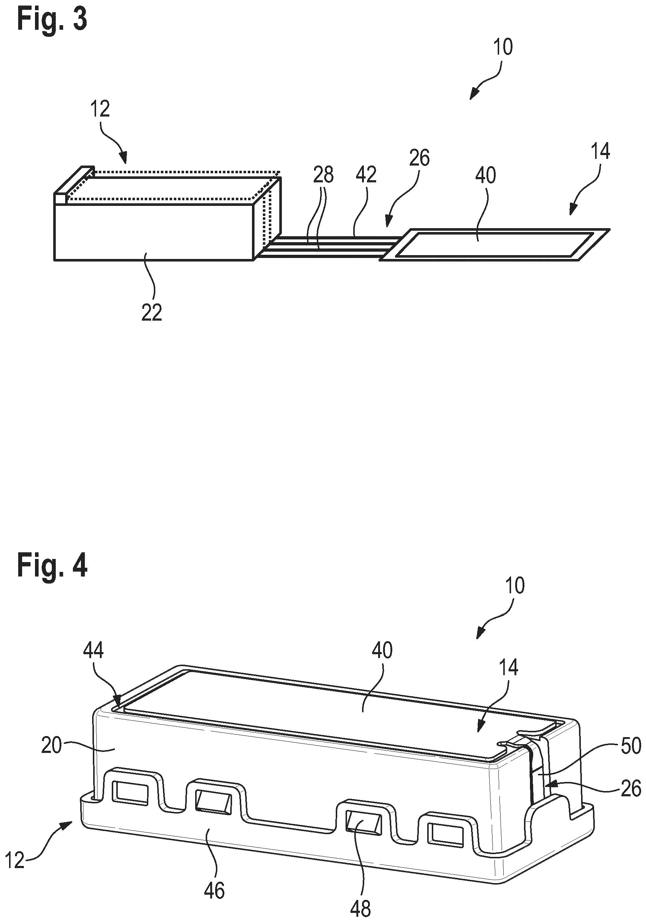

A further embodiment of a disclosed NFC system 10 can be seen in Figure 3. In this embodiment, the antenna 14 is located on a frame 40, which may be placed onto the device housing 22 of the NFC device 12.

By having the antenna 14 located on a frame 40, which is smaller than the device housing 22, more possibilities for placing the antenna 14 are created. In particular, the frame 40 is more flexible than the antenna housing 24 such that the antenna 14 and the frame 40 may be moulded against the mounting surface.

Actually, the frame 40 may ensure that the antenna 14 placed on the frame 40 can be bent.

It can also be seen in the embodiment shown in Figure 3, that the flexible connection 26 consisting of two flexible wires 28 is attached to a ground plate 42.

The ground plate 42 is able to mitigate emission from the two wires, especially at their connection point to the frame 40 or alternatively the antenna housing 24 and the device housing 22 or the circuit board 18.

A third embodiment is shown in Figures 4 and 5. In this embodiment, the antenna 14 is also placed on a frame 40, which is placed into a recess 44 of the device housing 22.

In particular, a standing structure 46 comprising clip members 48 such that the device housing 22 of the NFC device 12 and consequently the antenna 14 may be clipped onto the standing structure 46.

In Figures 4 and 5, which also show the third embodiment, the flexible connection 26 is provided by a flat conductor cable 50. The flat conductor cable 50 provides a signal-transmitting connection between the antenna 14 and the NFC device 12, particularly the circuit board 18, while connecting the frame 40 to the device housing 22.

The connection between the antenna 14 and the circuit board 18 is best seen in Figure 5.

Further, Figure 5 shows that the connector 20 for the NFC device 12 is placed on the circuit board 18. The connector 20 allows the NFC device 12 to be connected to other electric components, for example a vehicle access system as shown in Figure 6. In order to establish these electric connections, the connector 20 is accessible via an access opening 52 provided in the device housing 22.

As already described above, the NFC system 10 may be implemented with the antenna 14 attached to the NFC device 12 or alternatively the NFC device 12 and the antenna 14 may be installed at two separate locations. When the NFC system 10 is implemented with the antenna 14 clipped or attached to the NFC device 12, the antenna 14 is attached to the device housing 22 on a side opposite to the circuit board 18.

Due to the distance between the circuit board 18 and the antenna 14, the performance of the antenna 14 is increased since possible interference between the antenna 14 and the circuit board 18 or the antenna 14 and other electrical components is reduced.

In order to use the NFC system 10 as a part of a vehicle access system as shown in Figure 6, at least the antenna 14 needs to be positioned near a door handle 54 or a B-pillar of the vehicle 16 or any other access/start locations. By approaching the vehicle 16 with an intended NFC tag 56, the NFC device 12, in particular the circuit board 18 may decode the signal (electromagnetic field) received via the antenna 14 such that access to the vehicles 16 is granted.

Alternatively, the NFC system 10 may also be used as a starting mechanism for the vehicle 16 by placing the NFC system 10 inside the vehicle 16, for example near a key fob or a vehicle igniter. By approaching the antenna 14 of the NFC device 12 with the NFC tag 56, permission to start an engine of the vehicle 16 may be granted.

Similarly, such a NFC system 10 may also be used to grant access to a tire pressure-monitoring sensor by placing the NFC system 10 accordingly.

Generally, the antenna 14 that shall be placed at a location that can be accessed easily by an operator of the vehicle 16 may be located distanced to the NFC device 12 that processes the signal received, e.g. the electromagnetic field received. This is possible due to the flexible connection established between the NFC device 12 and the antenna 14.

Note that the NFC system 10 disclosed therein, in particular the modular characteristics, may also be used for ultra-wideband systems and Bluetooth low energy systems.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

### Reference Numbers

- 10: NFC system
- 12: NFC device
- 14: antenna
- 16: vehicle
- 18: circuit board
- 20: connector
- 22: device housing
- 24: antenna housing
- 26: flexible connection
- 28: flexible wire
- 30: fastening mechanism
- 32: snap-in member
- 34: center bar
- 36: circumferential frame
- 38: windows
- 40: frame
- 42: ground plate
- 44: recess
- 46: standing structure
- 48: clip member
- 50: flat conductor cable
- 52: access opening
- 54: door handle
- 56: NFC tag

## Claims

1. A near field communication, NFC, system (10), wherein the NFC system (10) is implemented in an application in a vehicle (16), the NFC system (10) comprising a NFC device (12) with a device housing (22) and an antenna (14), wherein the NFC device (12) and the antenna (14) are two separate components connected to each other with a flexible connection (26) forwarding currents between the NFC device (12) and the antenna (14).

2. The NFC system (10) according to claim 1, wherein the device housing (22) has a fastening mechanism (30) such that the antenna (14) is reversibly attached to the device housing (22) of the NFC device (12), in particular wherein the fastening mechanism (30) comprises a snap-in member (32) or a clip member (48).

3. The NFC system (10) according to any one of the preceding claims, wherein the device housing (22) has a fastening mechanism (30) capable of clipping the antenna (14) onto the device housing (22) of the NFC device (12).

4. The NFC system (10) according to any one of the preceding claims, wherein the antenna (14) and the NFC device (12) are movable with respect to each other so as to be mounted in separate locations.

5. The NFC system (10) according to any one of the preceding claims, wherein the antenna (14) is located on a frame (40), wherein the frame (40) is smaller compared to the device housing (22) of the NFC device (12).

6. The NFC system (10) according to any one of the preceding claims, wherein the antenna (14) is placed into an antenna housing (24).

7. The NFC system (10) according to claim 6, wherein the device housing (22) has a snap-in member (32) capable of establishing a snap-fit connection with the antenna housing (24) and/or wherein the antenna housing (24) has a snap-in member (32) capable of establishing a snap-fit connection with the device housing (22).

8. The NFC system (10) according to claim 6 or 7, wherein the antenna housing (24) comprises a center bar (34) and a circumferential frame (36) that encompasses a space divided by the center bar (34) such that two windows (38) are provided.

9. The NFC system (10) according to any one of the preceding claims, wherein the flexible connection (26) comprises at least two flexible wires (28).

10. The NFC system (10) according to claim 9, wherein the at least two flexible wires (28) are separately formed and/or wherein the at least two flexible wires (28) are parallel and within proximity to each other.

11. The NFC system (10) according to claim 9 or 10, wherein a ground plate (42) is attached to one side of the at least two flexible wires (28).

12. The NFC system (10) according to any one of the preceding claims, wherein the flexible connection (26) comprises a flat conductor cable (50).

13. The NFC system (10) according to any one of the preceding claims, wherein a circuit board (18) is positioned inside the device housing (22), in particular wherein the antenna (14) is attached to the device housing (22) on a side opposite to the circuit board (18).

14. The NFC system according to claim 13, wherein a connector (20) for the NFC device (12) is placed on the circuit board (18), and wherein an access opening (52) is provided in the device housing (22), via which the connector (20) is accessible.

15. The NFC system (10) according to any one of the preceding claims, wherein the antenna (14) is a flexible antenna or placed on a thin board structure.
